# EUROPEAN PATENT APPLICATION

(11) **EP 2 813 163 A1**
(43) Date of publication of application: **17.12.2014**
(21) Application number: 14000829.3
(22) Date of filing: 05.07.2011
(51) Int. Cl.: A47J 31/36, A47J 31/46, A47J 31/52

(54) **Set of pre-packed ground coffee pods for a coffee machine**

(30) Priority: 15.03.2011 IT GE20110029
(62) Divisional of application: 11749333.8
(71) Applicant: Espressocap S.p.A., 20010 Bareggio (MI) (IT)
(72) Inventor: Doria, Alessandro, I - 20147 Milano MI (IT)
(74) Representative: Natali, Dario

(57) **Abstract**

Coffee machine of the type for pre-packed ground coffee pods, comprising a tank for the infusion liquid, usually water, means for feeding said liquid under pressure to a heater, a dispensing unit comprising filter-holder means in which the pre-packed pod has to be positioned, means for feeding the pressurized hot water into said pre-packed pod, and means for delivering the coffee brew, characterized in that said means for feeding said liquid under pressure to said heater comprise at least two pumps operating in parallel between said tank and said heater, each of said pumps having a substantially high operating pressure and a substantially low flow rate.

## Description

### TEXT OF THE DESCRIPTION

The present invention relates to the pre-packed ground coffee pods suitable to be used in machines for the preparation of coffee.

A typical problem in the use of these machines arises from the need to satisfy the different tastes of users, particularly according to geographical areas, with regard to drinks obtained by the infusion of ground coffee. Whereas in Italy the concept of coffee is strictly linked to the dual concept of coffee made in a coffee pot at home and an espresso at a bar, with a marked propensity for espresso, in many other countries coffee is available in very different strengths, and the small espresso cup does not fully satisfy the requirements of those markets. Espresso is truly something enjoyable and exotic, but not the drink that is usually consumed.

The coffee that is generally consumed in many European countries and in the USA, the so-called "regular coffee", is usually obtained through procedures of preparation by percolation at atmospheric pressure or, in any event, by extraction at very low pressures, with the water supply having by contrast substantially high flow rates, otherwise waiting times would be extremely long. By operating in this way, however, the ground coffee is "under-extracted", i.e. the extraction that it undergoes does not bring into the infusion all those substances conferring the major organoleptic properties of an "espresso type" coffee infusion.

Vice versa, if an attempt is made to produce an infusion having a considerably larger volume than a standard small coffee cup using an espresso coffee machine, the combination of a high extraction pressure and a fairly low pump flow rate, given the small quantity of liquid normally required for extraction, means that the infusion is "over-extracted", i.e. not only are the substances that provide the coffee with its aroma extracted, but so too are other substances, which are a legacy of roasting the coffee and may also have harmful effects, and in any event have an unpleasant taste.

In espresso coffee machines using pre-packed pods, various expedients have been adopted in order to achieve an optimum extraction of the infusion by making best use of the characteristics of the pre-packed pod. In this regard, Document EP1723047, belonging to the present applicant, describes a delivery unit wherein the delivery of the infusion depends upon reaching a given pressure inside the pre-packed pod, which is perforated by an appropriate perforation means; the perforation enables the infusion to pass only when the pressure distorts the lips of the opening formed in the pre-packed pod. Clearly, in coffee machines of this type, it is not possible to consider reducing the supply pressure of the infusion liquid, given that the quality of the product would be reduced as well, precisely because the delivery could not take place in this way.

In document WO2011069829 is described a capsule brewing system, in which the capsules of different capacity have different sizes, whilst having the same cross section. Clearly, this kind of solution is not useful if it is not provided a brewing chamber, i.e. the filter holder which is able to lodge stably all the different sizes of capsules.

An aim of the present invention is to provide a set of pre-packed ground coffee pods suitable for use in the same coffee machine.

Therefore, an object of the present invention is a set of pre-packed ground coffee pods, the said pods being each provided with a container body having an open end, provided with a radial projecting flange, and a bottom end, the said pods being all formed so as to be fitted in the same given filter-holder of a coffee machine, the said set of pods comprising at least a first pod having an inner volume of the container body substantially corresponding to the maximum allowable volume for the given filter holder, and at least a second pod having an inner volume of the container body which is considerably lower than that of the said first pod, the said first and the said second pod having the same overall dimensions.

Other advantages and features will be apparent from the following detailed description of a preferred embodiment of the present invention which is provided by way of illustration, and not by way of limitation, with reference to the accompanying drawings in which:
Figures 1A and 1B show said first pre-packed pod of the series of pre-packed pods according to the present invention;
Figures 2A and 2B show said second pre-packed pod of the series of pre-packed pods according to the present invention;
Figure 3 is a sectional view of the delivery unit of an embodiment of the coffee machine according to the present invention.
Figure 4A and 4B show further embodiment of the said second pre-packed pod of the set of pre-packed pods according to the present invention;
Figure 6 is a sectional view of the delivery unit of a further embodiment of the coffee machine according to the present invention, in which is displayed the use of the pod shown in the figures 4A, 4B.

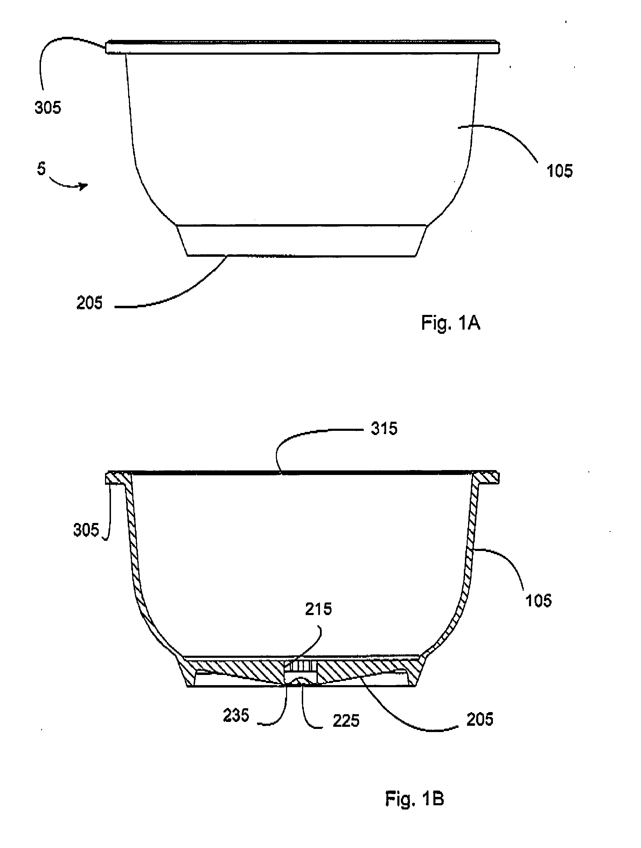

Figure 1A shows a side elevation of a first pre-packed pod of the set of pre-packed pods according to the present invention. The pod 5 has a substantially cup-shaped container body 105 which is both tapering convexly towards the bottom wall 205 and provided with an outwardly protruding radial flange 305. As can be seen from the section in Figure 1B, a closing surface 315 is positioned on the flange 305, while the bottom wall has, substantially at its centre, an axial cavity which is outwardly provided with a closing lid 225 whose structure has thin areas 235 at the edges of said cavity 215.

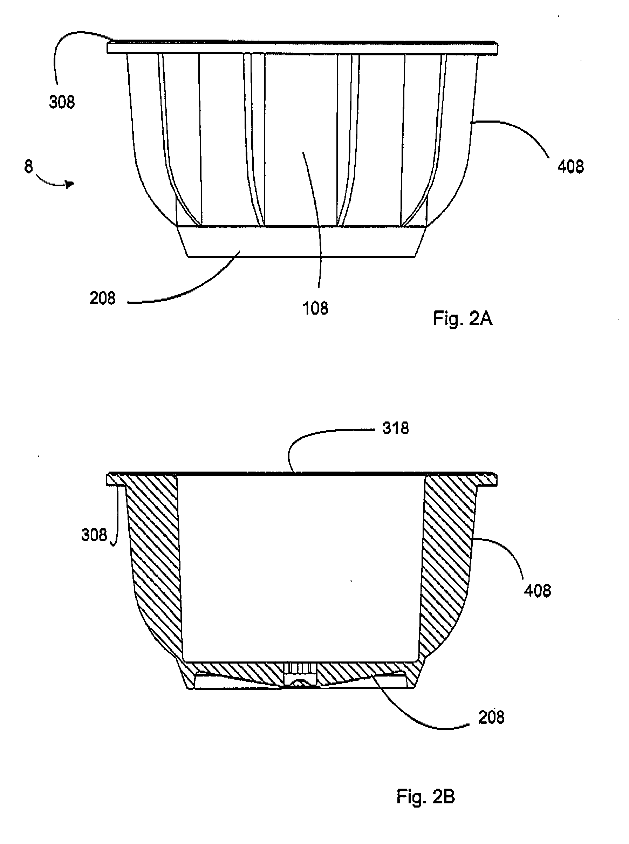

By contrast, Figure 2A shows a second pre-packed pod of the series of pre-packed pods according to the present invention. The pod 8 in question has a container body 108 of considerably smaller size than that of the pod 5 previously described, but made with a plurality of protruding equidistant radial fins 408, formed with a profile such as to enable the insertion of this prepackaged pod into the same filter-holder as used for the pod 5 of Figures 1A, 1B, as will become clearer below. The container body 108 provided with an outwardly protruding radial flange 308, a closing surface 318 being positioned on the flange 308.

Figure 2B clarifies the above-described concepts, showing the actual capacity of the container body 108 and the function of the fins 408. The bottom wall is made in an absolutely identical way to the bottom wall 205 of the pre-packed pod 5.

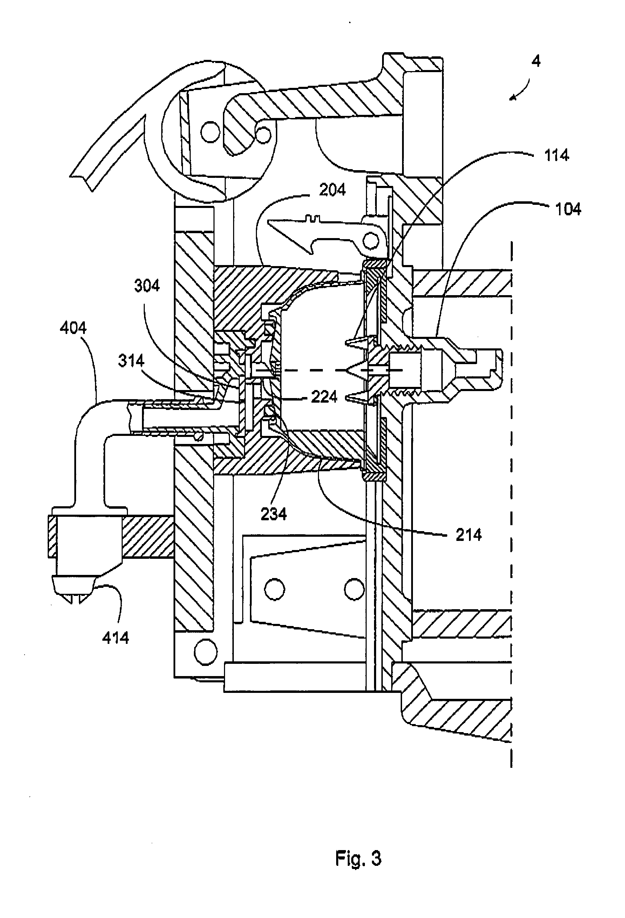

Figure 3 is a longitudinal sectional view of the delivery unit 4 of the coffee machine in which the set pods according to the present invention are to be used. The unit comprises a supply inlet 104 provided with a perforation head 114 which enables the opening of holes for the passage of water from the boiler into the pre-packed pod. As shown here, the pod 5 or the pod 8 are positioned alternatively inside a filter-holder 204 provided with a substantially cup-shaped cavity 214 having means 224 to perforate the bottom wall 205, 208 of the pre-packed pod on the bottom wall thereof. Around the perforation area there is arranged a seal 234 that places the area around the opening formed by the perforation means in communication with a membrane 304 provided with an axial through-hole 314, which effectively places the filter-holder 204 in communication with the delivery pipe 404 terminating in the delivery spout 414. As can be observed, the drawing shows both the pre-packed pod 5 and the pre-packed pod 8 in the filter-holder.

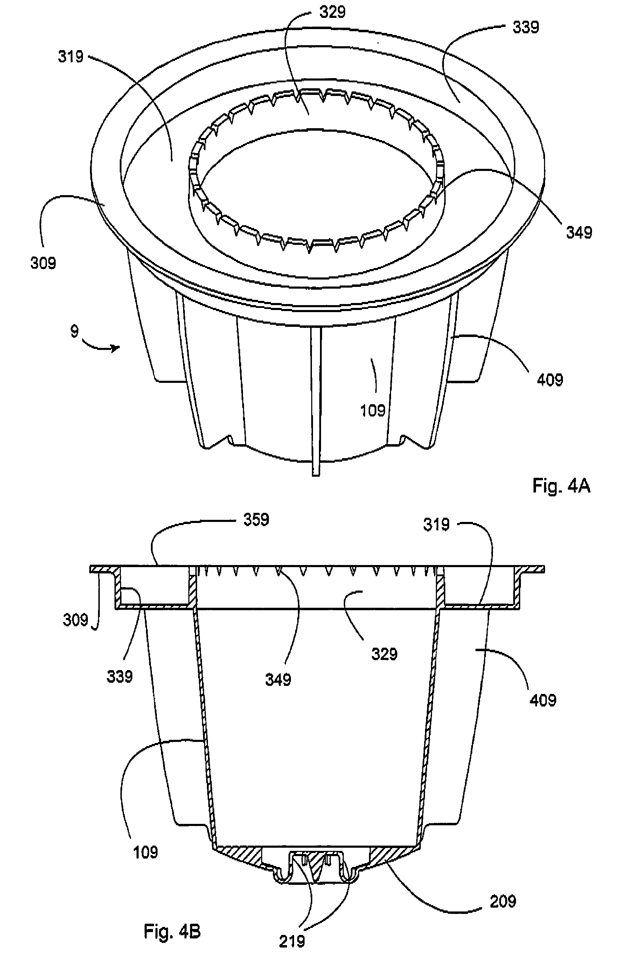

In Figure 4A is shown an alternative embodiment of the second pod of the series of pre-packed pods according to the present invention. The pod 9 is provided with a container body 109, provided with a number of projecting radial fins 409. The open end of the pod is provided with an annular channel 319, formed in the said radial projecting flange 309 and surrounding the said open end; the said channel 319 has an outer side wall 339 and an inner side wall 329, provided with a number of V-shaped slits 349.

As it is shown in Figure 4B, the channel 319 is in fluid communication with the inside of the container body 109 by means of the slits 349. In the figure is also shown the bottom wall 209 of the pod 9, provided with the openings 219.

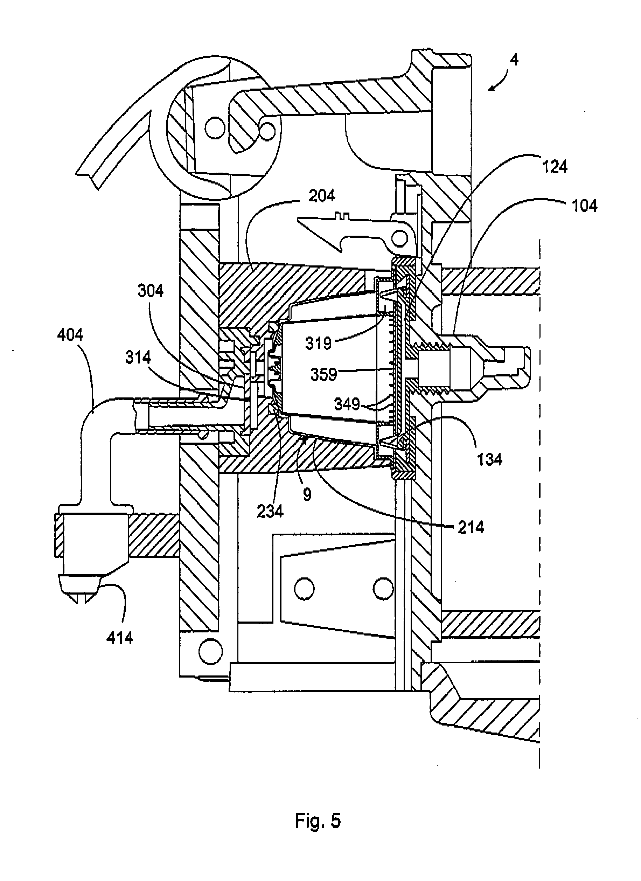

The figure 5 is a longitudinal sectional view of an alternative configuration of the delivery unit 4 of the coffee machine as shown in figure 3. The unit comprises a supply inlet 104 provided supply ducts 124 and perforation teeth 134 with which enables the opening of holes for the passage of water from the boiler into the pre-packed pod 9, through the closing surface 359. The water can accede to the container body of the pod 9 by filling the channel 319 and then through the slits 349. The pod 9 is positioned inside a filter-holder 204 provided with a substantially cup-shaped cavity 214,

At the bottom end of the said cavity 214 is arranged a seal 234 that places the area around the openings formed in the bottom wall of the pod in communication with a membrane 304 provided with an axial through-hole 314, which effectively places the filter-holder 204 in communication with the delivery pipe 404 terminating in the delivery spout 414.

The operation of the set of pre-packed ground coffee pod according to the present invention will become clearly evident as follows. As it can be seen in fig. 3, the two different pods 5 and 8 can be stably inserted in the same filter holder, and therefore the brew can be produced in different quantities bearing the same extraction conditions.

In fact, the expedient whereby the pre-packed pods of the types shown in Figures 3A and 3B can be employed in the same machine, the overall dimensions of the pod 5 and 8 are the same, whilst the inner capacity of the container body 108 is considerably lower than that of the container body 105 of the pod 5. By this way, the change in the inner volume does not prevent the use of different pods of the set in the same coffee machine. Clearly, there is a number of different possible solutions to compensate the different dimensions of the container bodies, and between those different solutions, the use of the radial projecting fins 408 or 409 allows good results in terms of effectiveness.

In some cases it would be preferred to supply the water near the side wall of the pre-packed pod, so as to perform more carefully the infusion and to allow the water to contact the coffee powder in a more effective way. In this case, the pins or teeth for the perforation of the closing surface has to be positioned more outwardly, that is to say in the way shown in Figure 6 for the teeth 134. However, this arrangement would prevent the use of a pod such as that shown in Figs. 2A, 2B and indicated with the numeral 8, because the teeth 134 are positioned outside of the accessible opening of said pod 8.

On the contrary, the pod 9 is provided with a collecting channel 319 which allows to collect the water flowing from the ducts 124 through the openings produced by the teeth 134. The same channel communicates with the inside of the container body 109 of the pod 9 by means of the slits 349.

## Claims

1. Set of pre-packed ground coffee pods, the said pods (5, 8; 9) being each provided with a container body (105;108; 109) having an open end, provided with a radial projecting flange (305;308; 309, 319), and a bottom end (205; 208; 209), the said pods (5, 8; 9) being all formed so as to be fitted in the same given filter-holder of a coffee machine, the said set of pods comprising at least a first pod (5) having an inner volume of the container body (105) substantially corresponding to the maximum allowable volume for the given filter holder, and at least a second pod (8; 9) having an inner volume of the container body (108; 109) which is considerably lower than that of the said first pod (5), the said first and the said second pod having the same overall dimensions.

2. Set of pods according to claim 1, wherein said second pod (8; 9) has a container body (108; 109) which is smaller than that of said first pod, and is provided of outwardly projecting members (408; 409) adapted for compensating said size reduction.

3. Set of pods according to claim 2, in which said outwardly projecting members are a plurality of equidistant radial fins (408; 409).

4. , Set of pods according to anyone of the preceding claims 1 to 3, wherein said second pod (8; 9) has the open end of the said container body (108; 109) provided with a radial projecting flange (308; 309, 319) which is larger than the radial projecting flange (305) of the said first pod (5).

5. Set according to claim 3, in which the said second pod (9) has the open end surrounded by an annular collecting channel (319), formed in the said flange (309), the said channel (319) being in fluid communication with the inside of the said container body (109).
